Europäisches Patentamt

European Patent Office

Office européen des brevets

(11) Veröffentlichungsnummer: **0 237 771**
**B1**

(12) **EUROPÄISCHE PATENTSCHRIFT**

(45) Veröffentlichungstag der Patentschrift: **09.01.91**

(21) Anmeldenummer: **87101845.3**

(22) Anmeldetag: **10.02.87**

(51) Int. Cl.⁵: **A 01 F 15/14**

(54) Garnknüpfer nach dem System Deering-Hochdruck für Ballenpressen und dergleichen.

(30) Priorität: **08.03.86 DE 3607694**

(43) Veröffentlichungstag der Anmeldung:
**23.09.87 Patentblatt 87/39**

(45) Bekanntmachung des Hinweises auf die
Patenterteilung:
**09.01.91 Patentblatt 91/02**

(84) Benannte Vertragsstaaten:
**BE ES FR GB IT NL**

(56) Entgegenhaltungen:
**DE-A-1 920 508**
**DE-A-2 361 789**
**DE-A-2 418 845**
**DE-B-1 251 572**
**DE-C- 814 960**

(73) Patentinhaber: **P.D. Rasspe Söhne GmbH & Co.
KG
Stöcken 17
D-5650 Solingen 1 (DE)**

(72) Erfinder: **Homberg, Hans-Erich
Goldberger-Weg 9
D-5650 Solingen 11 (DE)**

(74) Vertreter: **Patentanwälte Dipl.-Ing. Walter
Kuborn Dipl.-Phys. Dr. Peter Palgen
Mulvanystrasse 2
D-4000 Düsseldorf (DE)**

Courier Press, Leamington Spa, England.

**Beschreibung**

Die Erfindung bezieht sich auf einen Garnknüpfer der dem Oberbegriff des Anspruchs 1 entsprechenden Art.

Derartige Garnknüpfer sind seit vielen Jahrzehnten allenthalben üblich und stellen eine Standardkonstruktion dar, die in dem DE-Fachbuch von Kühne "Landmaschinentechnik II" (1934) S. 85—90 beschrieben ist. In ihrer normalen Bauweise haben sie weitgehend einheitliche Abmessungen. Sie verarbeiten Sisalgarne oder synthetische Pressengarne. Im letzteren Fall sind bei der Herstellung überlicher BAllen aus Heu, Stroh, Altmaterialien, Gewächsen etc. mit einem Ballenquerschnitt von biz zu 600 · 600 mm und einer Ballenlänge von etwa 1 m Pressengarne von 320 bis 400 m/kg Lauflänge eingesetzt worden. Die Lauflänge gibt an, welche Länge 1 kg eines bestimmten Garnes aufweist, und ist ein Maß für die "Dicke" des Garnes.

In jüngerer Zeit sind nun Ballenpressen entwikkelt und auf den Markt gebracht worden, die erheblich größere Ballen bis zu etwa 1400 · 1400 · 2400 mm herstellen. Für derartige Ballen sind natürlich stärkere Pressengarne erforderlich. Bei synthetischen Pressengarnen geht es hierbei um den Bereich von etwa 300 bis 120 m/kg Lauflänge. Es wird natürlich angestrebt, diese Garne auf den vorhandenen oder jedenfalls in den wesentlichen Abmessungen und Bestandteilen nicht modifizierten Garnküpfern zu verarbeiten.

Die gleich Forderung an die Garnstärke, wie sie bei der Herstellung besonders großer Ballen auftritt, ist um übrigen zu erfüllen, wenn Ballen herkömmlicher Abmessungen besonders stark gepreßt werden sollen und dementsprechend unter hohem Druck stehen.

Dies Verarbeitung erweist sich jedoch in manchen Fällen als schwierig, denn die dickeren Pressengarne ergeben fülligere Knoten, die beim Aufbringen der Spannung des Ballens die Tendenz haben, sich noch etwas zusammenzuziehen, wobei Garnmaterial von den freien Knotenenden eingezogen wird. In manchen Fällen bleibt dann von den Knotenenden nicht viel übrig, und es ergeben sich unsichere Knoten, die sich lösen können.

Der Erfindung liegt die Aufgabe zugrunde, einen Garnknüpfer der dem Oberbegriff des Anspruchs 1 entsprechenden Art unter Beibehaltung seiner wesentlichen Konstruktionsmerkmale und Abmessungen so auszugestalten, daß auf ihm bei der Verarbeitung stärkerer Pressengarne sichere Knoten erzielbar sind.

Diese Aufgabe wird erfindungsgemäß durch die im Kennzeichen des Anspruchs 1 wiedergegebenen Merkmale gelöst.

Die Vergrößerung des in Rede stehenden Abstandes kann vorgenommen werden, ohne daß sich an der Funktion des Garnknüfpers im ganzen etwas ändert und ohne daß an presse wesentliche Modifikationen vorgenommen werden müssen. Die Abstandsvergrößerung hat die Wirkung, daß der Abstand von dem in dem Knüpferhaken gebildeten Knoten zur Schnittstelle an den Knotenenden größer und damit die Knotenenden selbst länger werden, so daß mehr Garn an den Knoten zur Verfugung steht, welches beim Zusammenziehen, des Knotens ohne Risiko eingezogen werden kann.

Es versteht sich, daß der Ausdruck "mindestens 40 mm" in einem vernünftigen Rahmen zu verstehen ist, d.h. nur den Abstandsbereich oberhalb 40 mm umfaßt, der innenhalb der üblich bemessenen Knüpferrahmen kkstruktiv noch unterzubringen ist.

Ein in diesem Sinne bevorzugter Abstandsbereich ist in Anspruch 2 wiedergegeben.

Grundsätzlich ist es natürlich möglich, den Abstand sowohl durch Verlagerung des Mitnehmers und des Messers als auch durch Verlagerung des Knüpferhakens zu beeinflussen. Die geringste Außenwirkung ergibt sich aber, wenn die Abstandsvergrößerung durch eine stärkere Schrägstellung der Knüpferhakenwelle herbeigeführt wird. Hierdurch ist erreicht, daß der Knüfper in seinen äußeren Anschlußmaßen durch die herbeigeführte Abstandsänderung überhaupt nicht beeinflußt wird.

In der Zeichnung ist ein Ausführungsbeispiel der Erfindung dargestellt.

Fig. 1 zeigt ein schematische Seitenansicht einer Ballenpressre mit einem Garnknüpfer;

Fig. 2 zeigt eine Seitenansicht des Knüferrahmens des Garnknüpfers nach Fig. 1 etwa in der gleichen Stellung, teilweise im Schnitt;

Fig. 3 zeigt eine perspektivische Ansicht des erfindungsgemäßen Garnknüpfers.

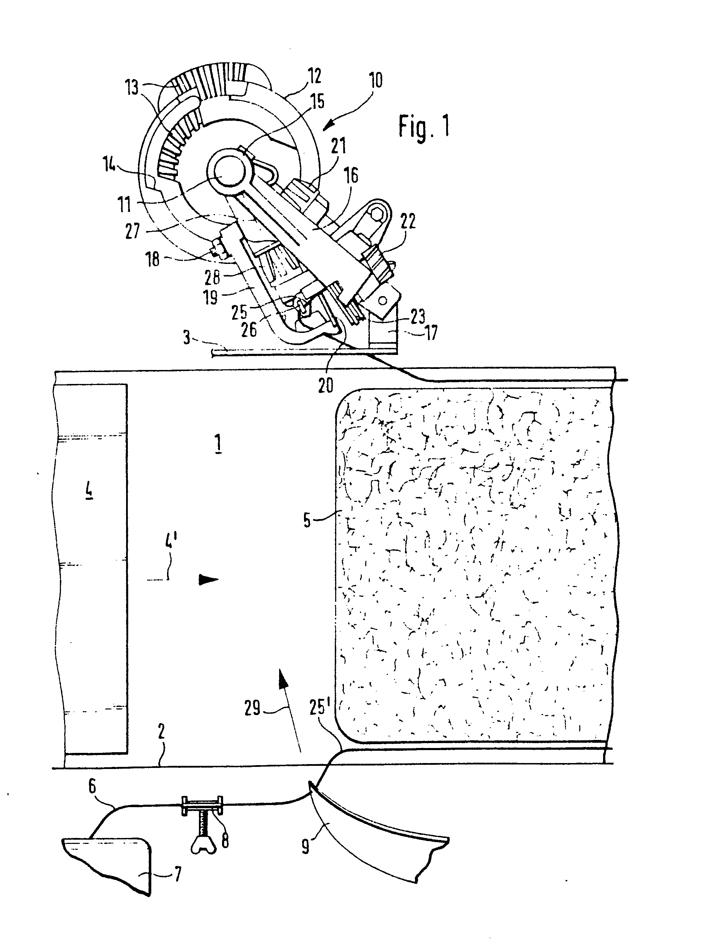

In Fig. 1 ist ein Pressenkanal 1 dargestellt, der durch einen Boden 2 und eine obere Abdeckung sowie entsprechende Seitenwände begrenzt ist. In dem Pressenkanal ist ein Preßkolben 4 gemäß Fig. 1 nach rechts bewegbar, der eine in dem in Fig. 1 nicht dargestellten linken Bereich in den Pressenkanal 1 eingebrachte Menge an Preßgut, zum Beispiel Stroh, mit einer vorher schon eingebrachten Menge in mehreren Hüben im Sinne des Pfeiles 4' zu einem Ballen 5 verpreßt. Der Ballen bewegt sich gemäß Fig. 1 nach rechts aus dem Pressenkanal 1 heraus und wird nach Fertigstellung ausgestoßen. Bei eine über ein Feld fahrenden Ballenpresse fallen die fertigen Ballen hinten heraus.

Damit der Ballen 5 seinen Zusammenhalt behält, wird er in zur Bewegungsrichtung parallelen vertikalen Ebenen mit Schlaufen aus Pressengarn 6 umbunden. Das Pressengarn 6 wird einem Garnvorrat 7 entnommen und durch eine Klemmvorrichtung 8 unter einer gewissen Spannung erhalten. Der Strang des Pressengarns 6 verläuft durch eine Öse einer sogenannten Pressennadel 9, sodann unter dem Ballen 5 nach rechts vorne bis zur gemäß Fig. 1 rechten Stirnseite des Ballens 5, entlang der Stirnseite nach oben und auf der Oberseite des Ballens 5 zurück zu dem oberhalb des Pressenkanals angeordneten Garnknüpfer 10, der währen der Bildung des Ballens 5 das Garn gegen den Druck des Preßkolbens 4 stramm- und festhält. Es sind durchweg zwei oder mehr Garnknüpfer 10 mit Abstand in der senkrecht zur Zeichenebene der Fig. 1 gelegenen Richtung nebeneinander vorgesehen, die eine entsprechende Anzahl von zueinander parallelen Garnschlaufen um den Ballen 5 bilden.

Auf einer oberhalb der oberen Abdeckung des Pressenkanals 1 angeordneten Grundplatte 3 ist eine quer zum Pressenkanal 1 horizontal verlaufende Knüpferwelle 11 vorgesehen, mit der Knüpferscheiben 12 drehfest verbunden sind, die Zahnsegmente 13 sowie Kurvensegmente 14 zur Betätigung der Funktionsteile des Garnknüpfers 10 aufweisen. Auf der Knüperwelle 11 sind ferner die Lageraugen 15 der Knüpferrahmen 16 gelagert, die sich allerdings nicht mitdrehen, sondern an ihrem freien Ende an einem Lagerbock 17 gegen Drehung abgestützt sind.

An dem Knüpferrahmen 16 ist um eine zu der Achse der Knüpferwelle 11 im wesentlichen senkrechte Achse 18 ein Messerhebel 19 mit einem Messer 20 schwenkbar gelagert. Das Messer 20 bewegt sich in einer Schwenkebene, die nicht genau, aber näherungsweise durch die Achse der Knüpferwelle 11 geht und dementsprechend auf der Zeichenebene der Fig. 1 senkrecht steht.

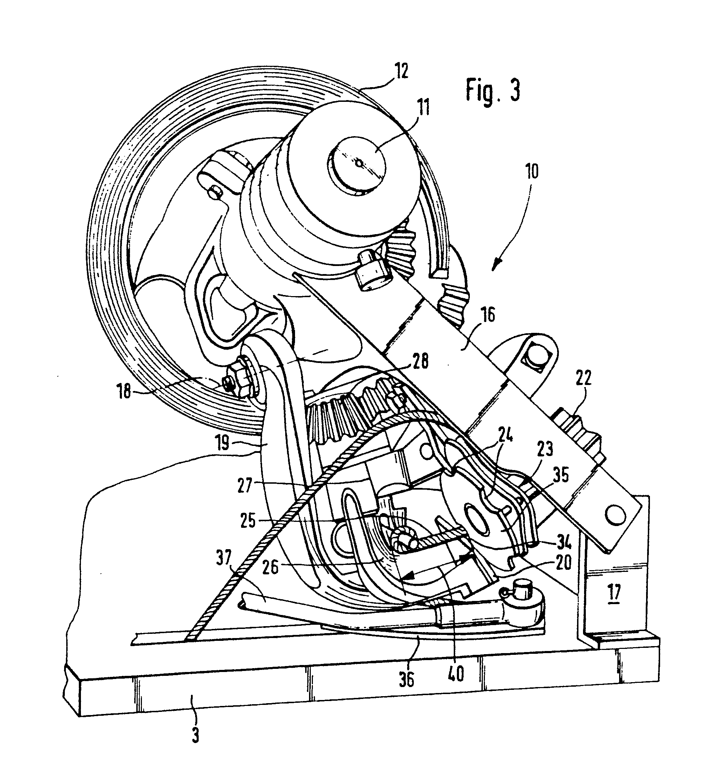

An dem Knüpferrahmen 16 ist ferner eine sogenannte Schneckenwelle 21 gelagert, die von einem der Zahnsegmente 13 angetrieben wird und über ihre Schnecke auf ein Ritzel 22 wirkt, welches auf der Achse 31 des Mitnehmers 23 sitzt, der in Fig. 1 rechts von der Schwenkebene des Messers 20 angeordnet ist. Die Achse 31 der Mitnehmerwelle erstreckt sich im wesentlichen senkrecht zu der Schwenkebene des Messers 20. Das Messer 20 bewegt sich relativ dicht vor dem aus mehreren koaxialen Scheiben bestehenden Mitnehmer 23. Es ist ein in Fig. 1 nicht erkennbarer Garnhalter vorgesehen, der zwischen die Scheiben des Mitnehmers 23 eingreift und einen quer zu dem Mitnehmer 23 durch eine dessen Randausnehmungen 24 (Fig. 3) verlaufenden Garnstrang 25 in dem Mitnehmer 23 festklemmt.

Auf der gemäß Fig. 1 linken Seite der Schwenkebene des Messers 20 ist der Knüpferhaken 26 vorgesehen, dessen Achse 27 im wesentlichen durch die Achse der Knüpferwelle 11 verläuft und der durch ein Ritzel 28 angetrieben ist, welches mit einem der Zahnsegmente 13 zusammenwirkt.

In der in Fig. 1 dargestellten Arbeitsphase ist das obere Ende des Pressengarns 6, d.h. der Strong 25, in dem Mitnehmer 23 festgehalten und verläuft über den Knüpferhaken 26 nach rechts um den Preßballen 5 herum. Wenn der Preßballen 5 fertiggestellt ist, schwenkt die Pressennadel 9 im Sinne des Pfeiles 29 nach oben in die Nähe des Knüpferhakens und über diesens hinaus in die Nähe des Mitnehmers 23. Der Knüpferhaken erfaßt dabei das Ende 25' des Pressengarns und bringt es mit dem oberen Ende 25 zusammen, so daß der Knüpferhaken 26 der Knoten bilden kann. Das zweite Ende 25' wird so weit gemäß Fig. 1 nach rechts verlagert, daß es von dem Mitnehmer 23 erfaßt werden kann. Wenn dann der Messerhebel 19 mit dem Messer 20 gemäß Fig. 1 aus der Zeichenebene nach vorn schwenkt, wird der fertiggebildete Knoten abgetrennt und ist das Ende 25' des Pressengarns in dem Mitnehmer 23 erfaßt. Nach dem Abtrefnen des Knotens ist die Garnschlinge um den Preßballen 5 geschlossen und kann dieser nach rechts aus dem Pressenkanal 1 ausgestoßen werden Es wird dann neues Preßmaterial durch den Preßkolben 4 herangeführt, wodurch der von der inzwischen wieder nach unten zurückgezogenen Pressennadel 9 zu dem Mitnehmer 23 verlaufende Garnstrang mit fortschreitender Ballenbildung nach rechts mitgenommen wird.

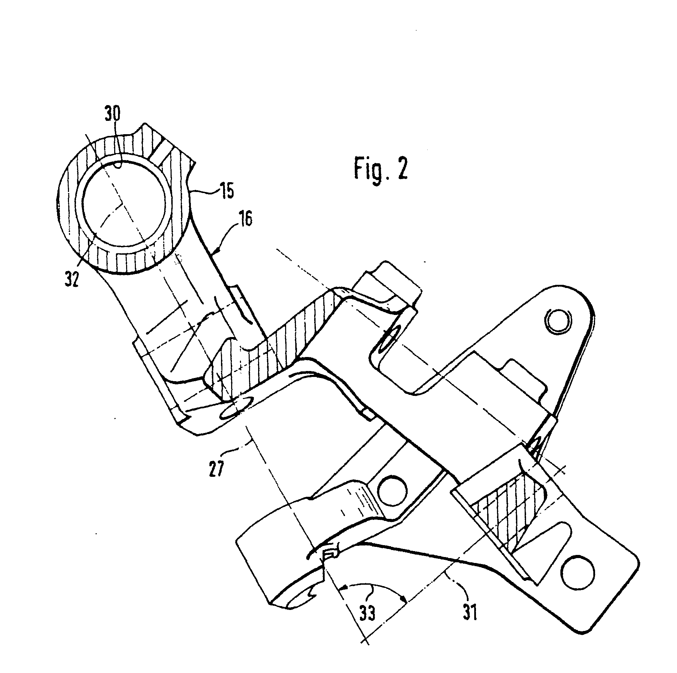

Der in Fig. 2 teilweise wiedergegebene Knüpferrahmen 16 sitzt mit der Innenbohrung 30 des Lagerauges 15 auf der Knüpferwelle 11. Die Achse 31 des Mitnehmers 23 bildet mit der Achse 27 des Knüpferhakens in einer senkrechte zur Achse 32 der Knüpferwelle gelegenen Ebene einen Winkel 33, der kleiner ist als bei den herkömmlichen Garnknüpfern, nämlich kleiner als 78°. Während also, wie aus Fig. 1 ersichtlich wird, der Mitnehmer 23 und auch das Messer 20 ihre Position gegenüber dem Pressenkanal beibehalten, ist die Achse 27 des Knüpferhakens 26 gemäß Fig. 1 nach links verschwenkt, so daß der Abstand von dem Knüpferhaken 26 zu dem Messer 20 größer wird als normal. Auf diese Weise werden die freien Knotenenden länger und kann sich ein fülliger Knoten, wie er sich bei einem dicken Pressengarn bildet, bis zum Festsitzen zusammenziehen, ohne daß die Knotenenden durch den Knoten schlüpfen können.

Der Garnknüpfer 10 ist in Fig. 3 noch einmal perspektivisch wiedergegeben. Es ist die Phase kurz vor dem Durchtrennen des von dem Knüpferhaken 26 zu dem Mitnehmer führenden Garnstrangs 25 wiedergegeben. Der Knüpferhaken 26 hat den Knoten gebildet, und es erstreckt sich der Garnstrang durch eine der vier Randausnehmungen 34 der Scheiben 35 des Mitnehmers 23. Das Messer 20 bewegt sich an dem Messerhebel 19 nach vorn und durchtrennt den Garnstrang 25 an einer Stelle, die sich in einem Abstand 40 von der Mittelebene des Knüpferhakens 26 befindet, die bei der wiedergegebenen Arbeitsstellung durch die Achse der Knüpferwelle verläuft.

Der Abstand 40 beträgt mindestens 40 mm, vorzugsweise 42 bis 44 mm, so daß die außerhalb des Knotens, d.h. zwischen dem Knüpferhaken 26 und dem Messer 20, verbleibenden, überstehenden Enden der Garnstränge 25, 25', die sogenannten Knotenenden, lang genug sind, daß sich der Knoten unter Einzug eines Teils dieser Knotenenden vollständig zusammenziehen kann, ohne daß eines der Knotenenden in den Knoten hineingerät und dieser sich öffnet.

36 bezeichnet den parallel zur Oberseite 3 des Pressenkanals 1 schwenkbaren Garnriegel, der mittels eines Lenkers 37 im Takt mit dem Garnknüpfer 10 bewegbar ist und den von der Pressennadel 9 hochgeförderten Garnstrang 25' dem Knüpferhaken 26 zuführt.

**Patentansprüche**

1. Garnknüpfer nach dem System Deering-Hochdruck für landwirtschaftliche Ballenpressen
   mit einer Knüpferwelle (11),
   mit einer auf der Knüpferwelle (11) drehfest angeordneten Knüpferscheibe (12) mit Zahn- und Kurvensegmenten (13, 14) zum Antrieb der beweglichen Funktionsteile,
   mit einem um eine zur Achse der Knüpferwelle (11) im wesentlichen senkrechte Achse (18) schwenkbaren Messerhebel (19) mit einem parallel zu seiner Schwenkebene angeordneten Messer (20),
   mit einem auf einer Seite der Schwenkebene des Messers (20) nahe diesem angeordneten, schrittweise um eine Achse (31) drehbaren Mitnehmer (23) in Form eines Satzes koaxialer, am Rand mit fluchtenden Ausnehmungen (24) für das Garn (25) versehenen Scheiben, die mit einem zwischen die Scheiben eingreifenden Garnhalter zusammenwirken und das Garn (25) während des Pressens, des Knotvorganges und des Schnittes festhalten, und
   mit einem auf der anderen Seite des Schwenkebene des Messers gelegenen Knüpferhaken (26), der um eine Achse (27) umläuft, die in einer durch die Achse (32) der Knüpferwelle (11) gehenden, zu der Achse (18) des Messerhebels (19) im wesentlichen senkrechten Ebene gelegen ist und in dieser Ebene mit der Senkrechten auf der Achse (32) der Knüpferwelle (11) einen sehr spitzen Winkel einschließt, dadurch gekennzeichnet, daß für die Verarbeitung stärkerer synthetischer Pressengarne von etwa 300 m/kg bit 120 m/kg Lauflänge der längs des Garnstrangs (25) gemessene Abstand (40) zwischen der die Achse (27) des Knüpferhakens (26) durchlaufenden Mittelebene des Knüpferhakens (26) und der Schwenkebene des Messer (20) mindestens 40 mm beträgt, wobei die Achse (27) des Knüpferhakens (26) mit der Achse (31) des Mitnehmers (23) in einer senkrecht zur Achse (32) der Knüpferwelle (11) gelegenen Ebene einen Winkel bildet, der kleiner als 78° ist.

2. Garnknüpfer nach Anspruch 1, dadurch gekennzeichnet, daß der Abstand (40) 40 mm bis 42 mm beträgt.

**Revendications**

1. Lieuse selon le système Deering haute pression pour doc presses de balles agricoles, comprenant un arbre de lieuse (11), un disque de lieuse (12) disposé de manière à ne pas tourner sur l'arbre de lieuse (11) avec des segments cburbes et dentés (13, 14) pour entraîner les pièces fonctionnelles mobiles, un levier de couteau (19) pouvant pivoter autour d'un axe (18) essentiellement perpendiculaire à l'axe d'arbre de lieuse (11) avec un couteau (20) disposé parallèlement à son plan de pivotement, un entraîneur (23) pouvant tourner pas à pas sur l'axe (31) disposé sur l'un des côtés du plan de pivotement du couteau (20) et près de celui-ci, sous la forme d'une série de disques coaxiaux munis d'évidements (24) sur le bord pour la ficelle (25) qui coopèrent avec un support de fil qui pénètre entre les disques et maintiennent la ficelle (25) pendant la compression, le nouage et la coupe, et un crochet de lieuse (26) placé de l'autre côté du plan de pivotement du couteau, qui tourne sur un axe (27), placé dans un plan qui passe sur l'axe (32) de l'arbre de lieuse (11) et est essentiellement perpendiculaire à l'axe (18) du levier de couteau (19) et qui inclut, dans ce plan, un angle très aigu avec la perpendiculaire à l'axe (32) de l'arbre de lieuse (11) caractérisé en ce que, pour utiliser des ficelles de presse synthétiques ayant environ 300 m/kg à 120 m/kg, l'écart (40) mésure le long du brin de ficelle (25) entre le plan moyen passant par l'axe du crochet de lieuse (26) et le plan de pivotement du couteau (20), vaut au moins 40 mm, l'axe (27) du crochet de lieuse (26) faisant un angle inférieur à 78° avec l'axe (31) de l'entraîneur (23) dans un plan perpendiculaire à l'axe (32) de l'arbre de lieuse (11).

2. Lieuse selon la revendication 1, caractérisé en ce que l'écart (40) est compris entre 40 mm et 42 mm.

**Claims**

1. A Deering high-density twine knotter for agricultural balers, comprising:
   a knotter shaft (11),
   a knotter disc (12) which is disposed on the knotter shaft (11) to corotate therewith and which has toothed and cam segments (13, 14) for driving the moving operating elements;
   a blade lever (19) pivotable around a pivot (18) which is substantially perpendicular to the axis of the knotter shaft (11), the blade lever having a blade (20) disposed parallel to the plane of pivoting of the blade lever (19);
   entraining means (23) which are disposed on one side of the pivoting plane of the blade (20) and near the blade and which are rotatable stepwise around an axis (31) and which are in the form of a set of coaxial discs formed at the edge with aligned recesses (24) for the twine (25), the discs co-operating with a twine holder engaging between the discs and retaining the twine (25) during baling, knotting and severance; and
   a knotter hook (26) which is disposed on the other side of the plane of pivoting of the blade (20) and which rotates around a pivot (27), the same being disposed in a plane which passes through the knotter shaft axis (32) and which is substantially perpendicular to the blade lever pivot (18) and which includes in this plane a very acute angle with the perpendicular to the knotter shaft axis (32), characterised in that for processing relatively thick synthetic baler twines of a density of from approximately 300 m/kg to 120 m/kg the distance (40) as measured along the twine strand (25) between the knotter hook centre-plane passing through the knotter hook pivot (27) and the plane of pivoting of the blade (20) is at least 40 mm, the knotter hook pivot (27) forming with the axis (31) of the entraining member (23) in a plane perpendicular to the knotter shaft axis (32) an angle of less than 78°.

2. A yarn knotter according to claim 1, characterised in that the distance (40) is from 40 mm to 42 mm.

Fig. 1

Fig. 2

30

15

16

32

27

33

31

Fig. 3